# EUROPÄISCHE PATENTANMELDUNG

(11) **EP 2 620 521 A1**
(43) Veröffentlichungstag der Anmeldung: **31.07.2013**
(21) Anmeldenummer: 12152554.7
(22) Anmeldetag: 25.01.2012
(51) Int. Cl.: C23C 18/12, C23C 22/00, A47J 36/02, C23C 18/04, B05D 5/08

(54) **Verfahren zum Herstellen einer keramischen Antihaftbeschichtung und entsprechende Artikel mit einer solchen Antihaftbeschichtung**

(71) Anmelder: Looser Holding AG, 9320 Arbon (CH)
(72) Erfinder: Brand, Jörg, 8854 Galgenen (CH); Geisel, Hans Georg, 8854 Siebnen (CH)
(74) Vertreter: Schmauder & Partner AG Patent- & Markenanwälte VSP

(57) **Zusammenfassung**

Um eine keramische Antihaftbeschichtung (4), die aus einer oder zwei Schichten bestehen kann, auf ein metallisches Substrat (1) haftend aufzubringen, ohne dass ein Prozess des Sandstrahlens notwendig ist, wird vorgeschlagen, vor dem Aufbringen der Antihaftbeschichtung (4) eine Unterschicht (3) mit einer flüssigen Beschichtungszusammensetzung aufzutragen. Diese Unterschicht (3) besteht aus einem hitzebeständigen nicht-fluorpolymerhaltigen Bindemittel, Lösungsmitteln und anorganischen Füllstoffpartikeln mit einer mittleren Teilchengrösse zwischen 9 und 40 µm.

## Beschreibung

### Technisches Gebiet

Die Erfindung betrifft ein Verfahren zum Herstellen einer keramischen Antihaftbeschichtung. Weiterhin betrifft die Erfindung einen Artikel, insbsondere einen Haushaltsgegenstand oder einen Gebrauchsgegenstand mit einer solchen Antifhaftbeschichtung.

### Hintergrund der Erfindung und Stand der Technik

Herkömmlich werden Antihaft-Beschichtungen aus Polytetrafluorethylen (PTFE) enthaltenden Zusammensetzungen hergestellt. Solche PTFE-Beschichtungen weisen jedoch bekanntermassen eine Reihe von Nachteilen auf. Einerseits erfordern die Herstellverfahren einen Sinterprozess bei einer Temperatur zwischen 360 und 420°C, bei dem sich Teile der Beschichtungszusammensetzung unter Bildung toxischer Verbindungen (z.B. Fluorphosgen, Tetrafluorethen oder Trifluoressigsäure) zersetzen (Nature, Vol. 412, 19, July 2001, p. 321-324). Zudem wird beim Sinterprozess das Treibhausgas Fluoroform (HFC-23) freigesetzt. Der Sinterprozess ist aufgrund der verwendeten hohen Temperaturen ein teurer und energieverbrauchender Prozess. Andererseits weisen PTFE-haltige Antihaft-Beschichtungen eine unzureichende Härte auf. Darüber hinaus kann die Überhitzung des Kochgeschirrs zur Freisetzung toxischer Zersetzungsprodukte - wie oben bereits zum Herstellprozess erwähnt - führen.

Auf Grund dieser Nachteile von PTFE-haltigen Beschichtungen wurden in den letzten Jahren verschiedene PTFE-freie keramische Beschichtungen auf Sol-Gel Basis entwickelt.

So offenbart die EP 1 835 002 A2 eine Antihaftbeschichtung aus zwei Schichten, bei der die erste sogenannte Basisschicht aus einer Matrix eines Kondensationsproduktes des Siliziumdioxid-Sols mit einem Organoalkoxysilan besteht und darauf eine Oberschicht aus einer Matrix eines Kondensationsproduktes eines Siliziumdioxid-Sols mit einer Mischung aus einem Organoalkoxysilanen und einem Fluoralkoxysilan aufgebracht ist.

In der DE 197 14 949 A1 ist eine abriebfeste glasartige Beschichtungszusammensetzung beschrieben, die erhalten wird durch Hydrolyse und Kondensation eines Silanes RSi(OR')₃ mit nanoskaligen SiO₂-Teilchen und Hydroxiden der Alkali- und Erdalkalimetalle mit anschliessender Umwandlung bei einer Temperatur von mehr als 400 °C in einen dichten Film.

Aus der EP 2 177 580 B1 ist eine keramische Antihaftbeschichtung bekannt, welche durch Hydrolyse und Polykondensation eines Silanes RSi(OR')₃ mit nanoskaligen SiO₂-Teilchen, einem hydroxyfunktionellen Polydimethylsiloxan, einer Carbonsäure, mit Wasser mischbare organische Lösungsmittel und Wasser erhalten wird.

Diese keramischen Antihaft-Beschichtungen besitzen auf metallischen Substraten jedoch nur dann ausreichende Haftung, wenn die Oberfläche vorher aufgeraut wird. Dieses Aufrauen erfolgt normalerweise durch Sandstrahlen mit Korund. Als Alternative können Ätzprozesse sowie eine metallische oder oxidische thermische Spritzschicht die notwendige Rauheit der Oberfläche erzeugen.

Keramische Antihaft-Beschichtungen, die nach dem Sol-Gel Verfahren hergestellt werden, weisen darüber hinaus auf Stahl nur unzureichende Korrosionsbeständigkeit auf. Dies könnte man selbstverständlich durch den Einsatz von hochlegierten Edelstählen vermeiden, die besser geeignet aber sehr teuer sind.

Die genannte Korrosionsbeständigkeit ist selbstverständlich eine graduelle Eigenschaft. Wenn man dementsprechend eine geringere Korrosionsbeständigkeit in Kauf nimmt, kann man allenfalls - weiterhin unter Verzicht auf hochlegierten Edelstahl - korrosionsverbesserte Metalle verwenden.

Übliche Vorbehandlungsverfahren, um das Korrosionsverhalten von Metallen zu verbessern, wie das Aufbringen von Phosphatschichten oder phosphatfreie Umwandlungsschichten wie Bonderite-NT-1 zeigen als Untergrund für keramische Sol-Gel Schichten unzureichende Rauigkeiten und somit zeigen die keramischen Sol-Gel Schichten keine ausreichende Haftung auf dem vorbehandelten Untergrund.

US 2007/0036900 A1 beschreibt ein Verfahren, bei dem ein fluorpolymerfreies Bindemittel mit anorganischen Partikeln mit einer mittleren Teilchengrösse von nicht mehr als zwei Mikrometer auf ein Substrat aufgebracht wird und getrocknet wird. Auf die so aufgebrachte Basisschicht wird die Antihaft-Beschichtung aufgebracht. Die Korrosionsfestigkeit wird hierbei durch die geringe Teilchengrösse der anorganischen Füllstoffpartikel erreicht, die in der getrockneten Beschichtung eine dichte Packung bilden. Die Rauigkeit dieser Basisschicht ist jedoch nicht ausreichend gross, um eine ausreichende Haftung von keramischen Sol-Gel Beschichtungen auf dieser Basisschicht zu ermöglichen.

### Darstellung der Erfindung

Aufgabe der vorliegenden Erfindung ist es dementsprechend, ein Verfahren zum Aufbringen einer Antihaftbeschichtung vorzuschlagen, mit dem mittels der Beschichtungszusammensetzung sowohl eine hohe Korrosionsbeständigkeit als auch eine gute Haftung einer keramischen Sol-Gel Beschichtung auf metallischen Substraten ohne Sandstrahlen, Ätzprozesse oder thermische Spritzschichten ermöglicht wird.

Die Aufgabe wird erfindungsgemäss gelöst durch ein Verfahren nach Anspruch 1, wenn man eine einschichtige keramische Antihaftbeschichtung wünscht oder nach Anspruch 2, wenn man eine zweischichtige Antihaftbeschichtung wünscht.

In einer abgewandelten Form des Verfahrens - wenn eine geringere Korrosionsbeständigkeit in Kauf genommen wird oder ein hochlegierter Stahl zum Einsatz kommen darf - kann man auf die Umwandlungsschicht verzichten und die geforderte Korrosionsbeständigkeit durch die Auswahl des Substrates - also ein hochlegierter Stahl oder korrosionsverbesserte Metalle - erreichen.

Die verwendeten anorganischen Füllstoffpartikel besitzen eine mittlere Teilchengrösse von 9 bis 40 µm. Die mittlere Teilchengrösse ist definiert als die Teilchengrösse, in einem gegebenen Volumen, bei der 50% des gesamten Volumens der Partikel eine Teilchengrösse besitzt, die kleiner oder gleich der angegebenen Teilchengrösse ist (d₅₀). In einer besonders bevorzugten Ausführungsform beträgt die mittlere Teilchengrösse der verwendeten anorganischen Füllstoffpartikel 9 µm.

Die anorganischen Füllstoffpartikel verhindern das Schrumpfen der Unterschicht bei der Trocknung und erzeugen die nötige Rauigkeit um eine ausreichende Haftung zur nachfolgenden keramischen Sol-Gel Beschichtung der Oberschicht zu erreichen. Zu hohe Rauheitswerte führen zu Glanzverlusten der nachfolgenden keramischen Sol-Gel Beschichtung. In einer besonders bevorzugten Ausführungsform beträgt die Rauigkeit R_{A} zwischen 2 und 3 Mikrometer.

Vorteilhafte Ausgestaltungen des erfindungsgemässen Verfahrens sind in den abhängigen Patentansprüchen angegeben.

Vorteilhaft ist es, wenn die Unterschicht getrocknet wird. Dabei ist es besonders vorteilhaft, wenn das Trocknen der Unterschicht ein Einbrennprozess ist. Weiterhin als vorteilhaft hat sich herausgestellt, wenn die Trockenfilmschichtdicke der Unterschicht zwischen 9 und 40 µm liegt. Die flüssige Beschichtungszusammensetzung der Unterschicht enthält vorteilhafterweise organische Lösungsmittel. Das fluorpolymerfreie Bindemittel kann mit Hilfe eines geeigneten Netzmittels in Wasser dispergiert oder in wasserlöslicher Form vorliegen. Vorteilhafterweise umfassen diese Bindemittel Polyethersulfone (PESU) und/oder Polyphenylensulfide (PPS) und/oder Polyimide (PI) und/oder Polyamidimide (PAI). Weiterhin kann es silikonmodifizierten Polyester umfassen.

Die anorganischen Füllstoffpartikel werden vorteilhaft aus der Gruppe anorganischer Oxide, Carbide, Boride und Nitride und Mischungen davon ausgewählt. Neben der Reduzierung des Schrumpfens der Unterschicht besitzen die genannten Füllstoffe meist hohe Härte, was zu einer erhöhten Abriebbeständigkeit des Gesamtschichtaufbaus beiträgt.

Eine weitere Aufgabe der Erfindung wird mit dem Bereitstellen eines Artikel mit einer metallischen Oberfläche als Substrat, einer Umwandlungsschicht, einer Unterschicht und zumindest einer keramischen einer keramischen Antihaftbeschichtung gelöst, wobei die genannten Schichten mittels des erfindungsgemässen Verfahrens ausgebildet bzw. appliziert sind. Vorteilhaft ist ein solcher Artikel als Haushalt- oder Gebrauchsgegenstand, insbesondere als Backform.

Der Festkörper der verwendeten Unterschicht beträgt in einer besonders bevorzugten Ausführungsform 15 - 55 Gew.%.

Die vorbenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können.

### Kurze Beschreibung der Figuren

Ausführungsbeispiele der Erfindung werden nachfolgend anhand von Zeichnungen näher beschrieben, dabei zeigen:

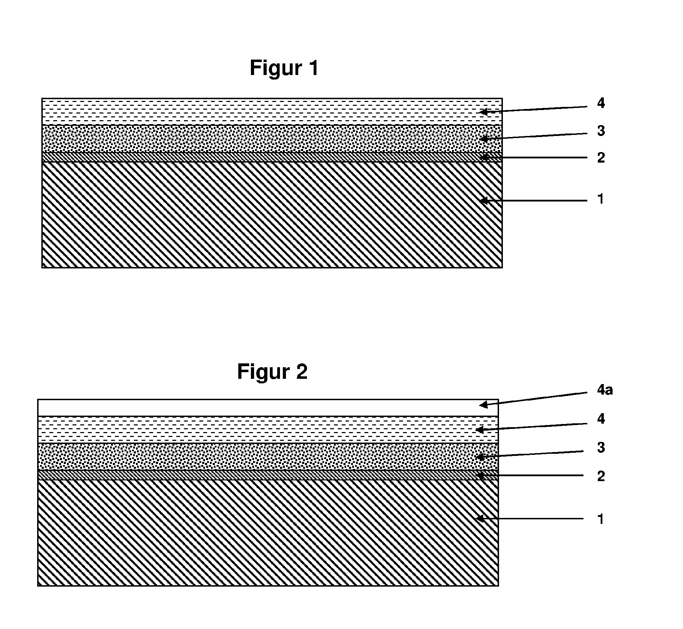

Figur 1 ein Schichtaufbaudiagramm gemäss einem ersten Ausführungsbeispiel mit einer keramischen Antihaftschicht;
Figur 2 ein Schichtaufbaudiagramm gemäss einem weiteren Ausführungsbeispiel mit zwei keramischen Antihaftschichten.

### Wege zur Ausführung der Erfindung

Das Substrat 1, auf das die Unterschicht 3 aufgebracht wird, besteht aus einem entfetteten unbehandelten metallischen Substrat, das durch chemische Vorbehandlung - mit oder ohne Anwendung von elektrischem Strom - mit einer möglichst korrosionsbeständigen Umwandlungsschicht 2 versehen wird. In einer besonders bevorzugten Ausführungsform wird auf das unbehandelte metallische Substrat eine phosphathaltige Umwandlungsschicht 2 aufgebracht. Dem Fachmann sind solche Umwandlungsschichten und die Verfahren zu deren Herstellung geläufig.

Die direkte Applikation von keramischen Sol-Gel Beschichtungen 4 auf korrosionsbeständige phosphathaltige oder phosphatfreie Umwandlungsschichten zeigen keine ausreichende Haftung der keramischen Schicht auf der Umwandlungsschicht, da die Rauigkeit dieser Umwandlungsschicht zu niedrig ist.

Eine erste keramische Schicht wird im vorliegenden Ausführungsbeispiel durch Hydrolyse und Polykondensation einer wässrigen Mischung erhalten wobei die Mischung enthält
- 10 - 70 Gew.-% eines Silans der allgemeinen Formel (I)

   (I) RSiX₃

   in der die Gruppen X hydrolysierbare Gruppen oder Hydroxylgruppen sind und die Reste R für Alkyl- oder Arylgruppen mit 1 bis 6 Kohlenstoffatomen stehen,
- 8 bis 21 Gew.-% nanoskaliger SiO₂-Partikel
- 0 bis 2 Gew.-% eines Polydimethylsiloxans der allgemeinen Formel (II)

   (II) HO-[Si(CH₃)₂]ₙ-OH

   in der n eine Zahl zwischen 2 und 170 darstellt,
- 0,1 bis 2 Gew.-% einer Carbonsäure mit 1 bis 4 Kohlenstoffatomen,
- 7 bis 50 Gew.-% Wasser
- 10 bis 60 Gew.-% mit Wasser mischbare organische Lösemittel, wobei die zuvor genannten Gewichtsanteile zusammen 100 Gew.-% ergeben.

Eine zweischichtige keramische Beschichtung wird - in einem alternativen Ausführungsbeispiel - erhalten durch Hydrolyse und Polykondensation einer wässrigen Mischung erhalten, wobei die Mischung enthält
- 10 - 70 Gew.-% eines Silans der allgemeinen Formel (I)

   (I) RSiX₃

   in der die Gruppen X hydrolysierbare Gruppen oder Hydroxylgruppen sind und die Reste R für Alkyl- oder Arylgruppen stehen,
- 8 bis 21 Gew.-% nanoskaliger SiO₂-Partikel
- 0,1 bis 2 Gew.-% einer Carbonsäure mit 1 bis 4 Kohlenstoffatomen,
- 7 bis 50 Gew.-% Wasser
- 10 bis 60 Gew.-% mit Wasser mischbare organische Lösemittel und dann durch Hydrolyse und Polykondensation einer wässrigen Mischung, wobei diese Mischung enthält
- 10 - 70 Gew.-% eines Silans der allgemeinen Formel (I)

   (I) RSiX₃

   in der die Gruppen X hydrolysierbare Gruppen oder Hydroxylgruppen sind und die Reste R für Alkyl- oder Arylgruppen mit 1 bis 6 Kohlenstoffatomen stehen,
- 8 bis 21 Gew.-% nanoskaliger SiO₂-Partikel
- 0 bis 2 Gew.-% eines Polydimethylsiloxans der allgemeinen Formel (II)

   (II) HO-[Si(CH₃)₂]ₙ-OH

   in der n eine Zahl zwischen 2 und 170 darstellt,
- 0,1 bis 2 Gew.-% einer Carbonsäure mit 1 bis 4 Kohlenstoffatomen,
- 7 bis 50 Gew.-% Wasser
- 10 bis 60 Gew.-% mit Wasser mischbare organische Lösemittel, wobei die zuvor genannten Gewichtsanteile zusammen 100 Gew.-% ergeben.

### Testmethoden

### Untersuchung der Haftung und der Korrosionsbeständigkeit

Die mit einer korrosionsbeständigen Umwandlungsschicht versehenen Metallbleche werden mit der erfindungsgemässen Unterschicht in einem Sprühprozess beschichtet und, wie in den Ausführungsbeispielen angegeben, getrocknet. Auf die getrocknete abgekühlte Unterschicht wird die keramische Antihaft-Beschichtung aufgesprüht und wie in den Ausführungsbeispielen angegeben, getrocknet.

Die so erhaltenen Prüfbleche werden mit einem 2 mm Gitterschnitt nach DIN EN ISO 2409 versehen und 3mal mit 3M 8402 Klebeband auf dem Schnittgitter beklebt und ruckartig abgerissen. Die Prüfbleche werden dann 10 Minuten dem Dampf kochender 2,5%iger wässriger Essigsäure ausgesetzt und abgekühlt. Das Schnittgitter wird erneut 3mal mit 3M 8402 Klebeband beklebt, ruckartig abgerissen und das Ergebnis beurteilt. Anschliessend werden die Prüfbleche weitere 20 Minuten dem Dampf kochender 2,5%iger wässriger Essigsäure ausgesetzt (insgesamt 30 Minuten) und abgekühlt. Das Schnittgitter wird erneut 3mal mit 3M 8402 Klebeband beklebt, ruckartig abgerissen und das Ergebnis beurteilt.

Anschliessend werden die Prüfbleche weitere 30 Minuten dem Dampf kochender 2,5%iger wässriger Essigsäure ausgesetzt (insgesamt 60 Minuten) und abgekühlt. Das Schnittgitter wird erneut 3mal mit 3M 8402 Klebeband beklebt, ruckartig abgerissen und das Ergebnis beurteilt.

### Beispiele

### Beispiel 1

Auf ein Zn,Mn-phosphatiertes Prüf-Stahlblech GARDOBOND^{®} 26S 6800 0C der Fa. Chemetall GmbH, Frankfurt a.M., Deutschland, wird durch Sprühen eine erfindungsgemässe Unterschicht nach Tabelle 1 aufgetragen und 5 Minuten bei 150 °C getrocknet und anschliessend 20 Minuten bei 280 °C vernetzt. Nach Abkühlen wird auf diese Unterschicht eine zweischichtige keramische Beschichtung, hergestellt wie in EP 2 177 580 B1 beschrieben, aufgetragen.

**Tabelle 1**

| **Rohstoff** | **Gew.%** | **Festkörper Gew.%** |
|---|---|---|
| Silikonmodifizierter Polyester 60% solid, 10% Silikongehalt | 33.33 | 20 |
| Xylol | 8.63 | |
| Butylglykol | 5.73 | |
| Cyclohexanon | 2.87 | |
| Dowanol^{®} PMA | 14.37 | |
| Estasol^{®} | 1.73 | |
| Siliciumcarbid | 33.33 | 33.33 |
| **SUMME** | **100** | **53.33** |

Die Trockenfilmschichtdicke der aufgebrachten keramischen Beschichtung betrug hierbei 47 µm. Die mittlere Rauheit R_{A} der GARDOBOND^{®} 26S 6800 0C Oberfläche betrug R_{A}=1,56 µm.

Die Ergebnisse der Haftungs- und Korrosionsprüfungen sind in **Tabelle 3** zusammengefasst.

### Beispiel 2

Auf ein Zn,Mn-phosphatiertes Prüf-Stahlblech GARDOBOND^{®} 26S 6800 0C der Fa. Chemetall GmbH, Frankfurt a.M., Deutschland, wird durch Sprühen eine erfindungsgemässe Unterschicht nach **Tabelle 2** aufgetragen und 5 Minuten bei 140 °C getrocknet und anschliessend 20 Minuten bei 280 °C vernetzt. Nach Abkühlen wird auf diese Unterschicht eine zweischichtige keramische Beschichtung, hergestellt wie in EP 2 177 580 B1 beschrieben, aufgetragen.

**Tabelle 2**

| **Rohstoff** | **Gew.%** | **Festkörper Gew.%** |
|---|---|---|
| *N*-Methylporrolidon | 60 | |
| Polyethersulfon | 10 | 10 |
| Siliciumcarbid | 30 | 30 |
| **SUMME** | **100** | **40** |

Die Trockenfilmschichtdicke der aufgebrachten keramischen Beschichtung betrug hierbei 22 µm. Die mittlere Rauheit R_{A} der GARDOBOND^{®} 26S 6800 0C Oberfläche betrug R_{A}=1,56 µm.

Die Ergebnisse der Haftungs- und Korrosionsprüfungen sind in **Tabelle 3** zusammengefasst.

### Beispiel 3

Auf ein Stahlblech (1.0394), welches mit BONDERITE^{®} CC40 der Fa. Henkel AG & Co KGaA, Düsseldorf, Deutschland, vorbehandelt wurde, wird durch Sprühen eine erfindungsgemässe Unterschicht nach **Tabelle 1** aufgetragen und 5 Minuten bei 150 °C getrocknet und anschliessend 20 Minuten bei 280 °C vernetzt. Nach Abkühlen wird auf diese Unterschicht eine zweischichtige keramische Beschichtung, hergestellt wie in EP 2 177 580 B1 beschrieben, aufgetragen.

Die Trockenfilmschichtdicke der aufgebrachten keramischen Beschichtung betrug hierbei 64 µm. Die mittlere Rauheit R_{A} der BONDERITE CC40^{®} Oberfläche betrug R_{A}=1,15 µm.

Die Ergebnisse der Haftungs- und Korrosionsprüfungen sind in **Tabelle 3** zusammengefasst.

### Beispiel 4

Auf ein Fe-phosphatiertes Prüf-Stahlblech GARDOBOND^{®} WH 60 0C der Fa. Chemetall GmbH, Frankfurt a.M., Deutschland, wird durch Sprühen eine erfindungsgemässe Unterschicht nach **Tabelle 1** aufgetragen und 5 Minuten bei 150 °C getrocknet und anschliessend 20 Minuten bei 280 °C vernetzt. Nach Abkühlen wird auf diese Unterschicht eine zweischichtige keramische Beschichtung, hergestellt wie in EP 2 177 580 B1 beschrieben, aufgetragen.

Die Trockenfilmschichtdicke der aufgebrachten keramischen Beschichtung betrug hierbei 26.5 µm. Die mittlere Rauheit R_{A} der GARDOBOND^{®} WH 60 0C Oberfläche betrug R_{A}=2.66 µm.

Die Ergebnisse der Haftungs- und Korrosionsprüfungen sind in **Tabelle 3** zusammengefasst.

### Beispiel 5

Auf ein Zn -phosphatiertes Prüf-Stahlblech GARDOBOND^{®} 26S 60 OC der Fa. Chemetall GmbH, Frankfurt a.M., Deutschland, wird durch Sprühen eine erfindungsgemässe Unterschicht nach **Tabelle 1** aufgetragen und 5 Minuten bei 150 °C getrocknet und anschliessend 20 Minuten bei 280 °C vernetzt. Nach Abkühlen wird auf diese Unterschicht eine zweischichtige keramische Beschichtung, hergestellt wie in EP 2 177 580 B1 beschrieben, aufgetragen.
Die Trockenfilmschichtdicke der aufgebrachten keramischen Beschichtung betrug hierbei 31 µm. Die mittlere Rauheit R_{A} der GARDOBOND^{®} 26S 60 OC Oberfläche betrug R_{A}=2.72 µm.
Die Ergebnisse der Haftungs- und Korrosionsprüfungen sind in **Tabelle 3** zusammengefasst.

### Vergleichsbeispiele

### Vergleichsbeispiel 1

Eine zweischichtige keramische Beschichtung, hergestellt wie in EP 2 177 580 B1 beschrieben, wird direkt auf ein Zn,Mn-phosphatiertes Prüf-Stahlblech GARDOBOND^{®} 26S 6800 0C der Fa. Chemetall GmbH, Frankfurt a.M., Deutschland, durch Sprühen aufgetragen und anschliessend 5 Minuten bei 150 °C getrocknet und 20 Minuten bei 200 °C eingebrannt.

Die Trockenfilmschichtdicke der aufgebrachten keramischen Beschichtung betrug hierbei 13 µm. Die mittlere Rauheit R_{A} der GARDOBOND^{®} 26S 6800 0C Oberfläche betrug R_{A}=1,56 µm.

Die keramische Beschichtung löst sich beim Abziehen des Klebebandes vollständig ab, ohne der Essigsäure ausgesetzt worden zu sein.

### Vergleichsbeispiel 2

Eine zweischichtige keramische Beschichtung, hergestellt wie in EP 2 177 580 B1 beschrieben, wird direkt auf eine mit BONDERITE^{®} CC40 der Fa. Henkel AG & Co KGaA, Düsseldorf, Deutschland, versehene Oberfläche eines Stahlbleches (1.0394) durch Sprühen aufgetragen und anschliessend 5 Minuten bei 150 °C getrocknet und 20 Minuten bei 200 °C eingebrannt.

Die Trockenfilmschichtdicke der aufgebrachten keramischen Beschichtung betrug hierbei 14,5 µm. Die mittlere Rauheit R_{A} der mit BONDERITE^{®} CC40 behandelten Oberfläche betrug R_{A}=1,15µm.

Die Ergebnisse der Haftungs- und Korrosionsprüfungen sind in **Tabelle 3** zusammengefasst.

**Tabelle 3**

| **Beispiel/ Vergleichsbeispiel** | **DFT der Sol-Gel Schicht [µm]** | **Adhäsion vor Testbeginn** | **Adhäsion nach 10 Minuten 2,5%Essigsäure-Dampf** | **Adhäsion nach 30 Minuten 2,5%Essigsäure-Dampf** | **Adhäsion nach 60 Minuten 2,5%Essigsäure-Dampf** |
|---|---|---|---|---|---|
| **Beispiel 1** | 47 | Gt0 | Gt0 | Gt0 | Gt0 |
| **Beispiel 2** | 22 | Gt0 | Gt0 | Gt0 | Gt0 |
| **Beispiel 3** | 64 | Gt0 | Gt0 | Gt0 | Gt0 |
| **Beispiel 4** | 26.5 | Gt0-1 | Gt0-1 | Gt0-1 | Gt0-1 |
| **Beispiel 5** | 31 | Gt0-1 | Gt0-1 | Gt0-1 | Gt0-1 |
| **Vergleichsbeispiel 1** | 13 | >Gt 5, vollständige Ablösung der Schicht | Nicht durchgeführt | Nicht durchgeführt | Nicht durchgeführt |
| **Vergleichsbeispiel 2** | 14.5 | Gt1 | Gt1 | Gt2 | >Gt5, vollständige Ablösung |

## Patentansprüche

1. Verfahren zum Beschichten eines Artikels, der eine metallische Oberfläche als Substrat (1) aufweist, mit einer keramischen Antihaft-Beschichtung (4) auf der Oberfläche, mit den Schritten
- Ausbilden einer korrosionsbeständigen Umwandlungsschicht (2) auf die Oberfläche mittels einer chemischen Vorbehandlung;
- Ausbilden einer Unterschicht (3) auf die Umwandlungsschicht (2) durch Aufbringen einer flüssigen Beschichtungszusammensetzung bestehend aus einem hitzebeständigen nicht-fluorpolymerhaltigen Bindemittel, Lösungsmitteln und anorganischen Füllstoffpartikeln mit einer mittleren Teilchengrösse zwischen 9 und 40 µm; und
- Applizieren einer keramischen Antihaft-Beschichtung (4) auf die Unterschicht (3), wobei die erste keramische Antihaftbeschichtung (4a) durch Reaktion eines wässrigen Siliziumdioxid-Sols und einem Organoalkoxysilan
(I) RSiX₃
in der die Gruppen X hydrolysierbare Gruppen oder Hydroxylgruppen sind und die Reste R für Alkyl- oder Arylgruppen mit 1 bis 6 Kohlenstoffatomen stehen, ausgebildet wird.

2. Verfahren zum Beschichten eines Artikels, der eine metallische Oberfläche als Substrat (1) aufweist, mit einer keramischen Antihaft-Beschichtung (4) auf der Oberfläche, mit den Schritten
- Ausbilden einer korrosionsbeständigen Umwandlungsschicht (2) auf die Oberfläche mittels einer chemischen Vorbehandlung;
- Ausbilden einer Unterschicht (3) auf die Umwandlungsschicht (2) durch Aufbringen einer flüssigen Beschichtungszusammensetzung bestehend aus einem hitzebeständigen nicht-fluorpolymerhaltigen Bindemittel, Lösungsmitteln und anorganischen Füllstoffpartikeln mit einer mittleren Teilchengrösse zwischen 9 und 40 µm;
- Applizieren einer ersten keramischen Antihaftbeschichtung (4a) auf die Unterschicht (3), wobei die erste keramische Antihaftbeschichtung (4a) durch Reaktion eines wässrigen Siliziumdioxid-Sols und einem Organoalkoxysilan
(I) RSiX₃
in der die Gruppen X hydrolysierbare Gruppen oder Hydroxylgruppen sind und die Reste R für Alkyl- oder Arylgruppen mit 1 bis 6 Kohlenstoffatomen stehen, ausgebildet wird, und
- Applizieren einer zweiten keramischen Antihaft-Beschichtung (4) auf die erste keramische Antihaftbeschichtung (4a), wobei die zweite Antihaftbeschichtung durch Reaktion eines wässrigen Siliziumdioxid-Sols und einem Organoalkoxysilan
(I) RSiX₃
in der die Gruppen X hydrolysierbare Gruppen oder Hydroxylgruppen sind und die Reste R für Alkyl- oder Arylgruppen mit 1 bis 6 Kohlenstoffatomen stehen, ausgebildet wird.

3. Verfahren zum Beschichten eines Artikels, der eine korrosionsverbesserte oder korrosionsbeständige metallische Oberfläche als Substrat (1) aufweist, mit einer keramischen Antihaft-Beschichtung (4) auf der Oberfläche, mit den Schritten
- Ausbilden einer Unterschicht (3) auf dem Substrat (1) durch Aufbringen einer flüssigen Beschichtungszusammensetzung bestehend aus einem hitzebeständigen nicht-fluorpolymerhaltigen Bindemittel, Lösungsmitteln und anorganischen Füllstoffpartikeln mit einer mittleren Teilchengrösse zwischen 9 und 40 µm; und
- Applizieren einer keramischen Antihaft-Beschichtung (4) auf die Unterschicht (3), wobei die erste keramische Antihaftbeschichtung (4a) durch Reaktion eines wässrigen Siliziumdioxid-Sols und einem Organoalkoxysilan
(I) RSiX₃
in der die Gruppen X hydrolysierbare Gruppen oder Hydroxylgruppen sind und die Reste R für Alkyl- oder Arylgruppen mit 1 bis 6 Kohlenstoffatomen stehen, ausgebildet wird.

4. Verfahren zum Beschichten eines Artikels, der eine korrosionsverbesserte oder korrosionsbeständige metallische Oberfläche als Substrat (1) aufweist, mit einer keramischen Antihaft-Beschichtung (4) auf der Oberfläche, mit den Schritten
- Ausbilden einer Unterschicht (3) auf dem Substrat (1) durch Aufbringen einer flüssigen Beschichtungszusammensetzung bestehend aus einem hitzebeständigen nicht-fluorpolymerhaltigen Bindemittel, Lösungsmitteln und anorganischen Füllstoffpartikeln mit einer mittleren Teilchengrösse zwischen 9 und 40;
- Applizieren einer ersten keramischen Antihaftbeschichtung (4a) auf die Unterschicht (3), wobei die erste keramische Antihaftbeschichtung (4a) durch Reaktion eines wässrigen Siliziumdioxid-Sols und einem Organoalkoxysilan
(I) RSiX₃
in der die Gruppen X hydrolysierbare Gruppen oder Hydroxylgruppen sind und die Reste R für Alkyl- oder Arylgruppen mit 1 bis 6 Kohlenstoffatomen stehen, ausgebildet wird, und
- Applizieren einer zweiten keramischen Antihaft-Beschichtung (4) auf die erste keramische Antihaftbeschichtung (4a), wobei die zweite Antihaftbeschichtung durch Reaktion eines wässrigen Siliziumdioxid-Sols und einem Organoalkoxysilan
(I) RSiX₃
in der die Gruppen X hydrolysierbare Gruppen oder Hydroxylgruppen sind und die Reste R für Alkyl- oder Arylgruppen mit 1 bis 6 Kohlenstoffatomen stehen, ausgebildet wird.

5. Verfahren nach einem der Ansprüche 1 bis 4, **dadurch gekennzeichnet, dass** die Unterschicht (3) getrocknet wird.

6. Verfahren nach einem der Ansprüche 1 bis 4, **dadurch gekennzeichnet, dass** das Trocknen der Unterschicht (3) ein Einbrennprozess ist.

7. Verfahren nach einem der vorhergehenden Ansprüche, **dadurch gekennzeichnet, dass** die Trockenfilmschichtdicke der Unterschicht zwischen 10 und 40 µm liegt.

8. Verfahren nach einem der vorhergehenden Ansprüche, **dadurch gekennzeichnet, dass** die flüssige Beschichtungszusammensetzung der Unterschicht (3) organische Lösungsmittel enthält.

9. Verfahren nach einem der vorhergehenden Ansprüche, **dadurch gekennzeichnet, dass** das fluorpolymerfreie Bindemittel mit Hilfe eines geeigneten Netzmittels in Wasser dispergiert oder in wasserlöslicher Form vorliegt.

10. Verfahren Artikel nach einem der vorhergehenden Ansprüche, **dadurch gekennzeichnet, dass** das fluorpolymerfreie Bindemittel Polyethersulfone (PESU) und/oder Polyphenylensulfid (PPS) und/oder Polyimid (PI) und/oder Polyamidimid (PAI) umfasst.

11. Verfahren nach einem der vorhergehenden Ansprüche, **dadurch gekennzeichnet, dass** das fluorpolymerfreie Bindemittel silikonmodifizierte Polyester umfasst.

12. Verfahren nach einem der vorhergehenden Ansprüche, **dadurch gekennzeichnet, dass** die verwendeten Füllstoffpartikel anorganische Oxide und/oder Nitride und/oder Carbide und/oder Boriden umfassen.

13. Artikel mit einer metallischen Oberfläche als Substrat (1), allenfalls einer Umwandlungsschicht (2), einer Unterschicht (3) und zumindest einer keramischen Antihaftbeschichtung, wobei die genannten Schichten mittels eines Verfahrens nach einem der Ansprüche 1 bis 12 ausgebildet bzw. appliziert sind, **dadurch gekennzeichnet, dass** der Artikel ein Haushalt- oder Gebrauchsgegenstand, insbesondere eine Backformen ist.

14. Artikel nach Anspruch 13, **dadurch gekennzeichnet, dass** der prozentuale Anteil an anorganischen Füllstoffen der getrockneten Unterschicht (3) zwischen 15 und 55 Gew.% beträgt.
